# EUROPÄISCHE PATENTSCHRIFT

(11) **EP 1 490 248 B1**
(45) Veröffentlichungstag und Bekanntmachung des Hinweises auf die Patenterteilung: **07.12.2005**
(21) Anmeldenummer: 02774411.9
(22) Anmeldetag: 25.09.2002
(51) Int. Cl.: B60R 21/00, B60R 21/01

(54) **VERFAHREN UND ANORDNUNG ZUR ANSTEUERUNG VON INSBESONDERE REVERSIBEL ANSTEUERBAREN RÜCKHALTEMITTELN**
METHOD AND ARRANGEMENT FOR CONTROLLING RETAINING MEANS WHICH CAN BE CONTROLLED IN AN ESPECIALLY REVERSIBLE MANNER
PROCEDE ET DISPOSITIF DE COMMANDE DE SYSTEMES DE RETENUE QUI PEUVENT ETRE COMMANDES NOTAMMENT DE FACON REVERSIBLE

(30) Priorität: 23.03.2002 DE 10212902
(43) Veröffentlichungstag der Anmeldung: 29.12.2004
(73) Patentinhaber: ROBERT BOSCH GMBH, 70442 Stuttgart (DE)
(72) Erfinder: SCHLICK, Michael, 71229 Leonberg (DE); HOETZEL, Juergen, 61197 Florstadt (DE); SOHNKE, Thorsten, 65719 Hofheim (DE); WEBER, Dirk, 71701 Schwieberdingen (DE); KUTTENBERGER, Alfred, 71696 Moeglingen (DE)
(86) Internationale Anmeldenummer: PCT/DE2002/003621
(87) Internationale Veröffentlichungsnummer: WO 2003/080399

(56) Entgegenhaltungen:
- DE-A- 10 128 141
- DE-A- 19 749 838
- DE-A- 19 917 710
- US-A- 5 285 188
- US-A- 6 087 928
- US-B1- 6 498 972

## Beschreibung

### Stand der Technik

Die Erfindung betrifft ein Verfahren und eine Anordnung zur Ansteuerung von insbesondere reversibel ansteuerbaren Rückhaltemitteln für Personen in einem Sitz in einem Fahrzeug bei der Erfassung einer Situation, bei der mit einer Kollision zwischen dem Fahrzeug' und einem Objekt zu rechnen ist.

Ein gattungsgemäßen Verfahren bzw. Vorrichtung ist aus US 5 285 188 bekannt.

In zunehmenden Masse werden nicht nur Fahrzeuge der gehobenen Klasse zum Schutz der Insassen im Falle eines Unfalles serienmäßig mit irreversibel ansteuerbaren Rückhaltemitteln wie pyrotechnisch zündbaren Airbags und pyrotechnisch zündbaren Gurtstraffern ausgerüstet, sondern auch mit reversibel ansteuerbaren Rückhaltemitteln, wie motorisch arbeitenden Gurtstrammern, um zur Vorbereitung auf eine unmittelbar bevorstehende Kollision die jeweilige Person in dem Sitz in eine besonders günstige Position zu bringen bzw. in dieser zu fixieren (DE 44 11 184 C2). Dabei ist es durchaus auch üblich, den Sitz im gegebenen Fall zu verstellen, beispielsweise die Lehne steil zu stellen und die Kopfstütze nach vorne zu neigen. Wesentliche Bedeutung kommt nicht nur der Erfassung der tatsächlichen Kollision sondern auch der Beurteilung zu, ob aufgrund von Umgebungsbedingungen eine Kollision zu erwarten ist (sogenannte Precrash-Sensorik). Von wesentlicher Bedeutung ist dabei, dass ein Auslösen der irreversibel ansteuerbaren Rückhaltemittel im Kollisionsfall mit hohem Verletzungsrisiko sichergestellt sein muss, deren fehlerhaftes Auslösen jedoch unbedingt zu vermeiden ist. Somit kommt die Verwendung eines Sensors, der die Beschleunigung oder Verzögerung rechnerisch ermittelt, etwa gemäß DE 41 12 579 C2, als zu unsicher nicht in Frage.

Für die Ansteuerung bzw. Auslösung der irreversibel ansteuerbaren Rückhaltemittel darf daher nur das tatsächliche Vorliegen einer gefährlichen Kollision herangezogen werden. Als sicherstes Mittel wird das Vorsehen mindestens eines elektromechanisch oder elektrisch wirkenden Beschleunigungssensors angesehen, der am Fahrzeug befestigt ist und eine unter einer bestimmten Vorbelastung stehende träge oder seismische Masse aufweist. Die Vorbelastung ist dabei so bestimmt, dass selbst bei Notbremsvorgängen die Masse sich nicht wesentlich bewegt, während im Fall einer tatsächlichen und gefährlichen Kollision sich die Masse entgegen der Vorbelastungskraft bewegt, einen Schalter betätigt und ein entsprechendes Signal an die Ansteuer- bzw. Auslöseeinrichtung der irreversibel ansteuerbaren Rückhaltemittel abgibt (vgl. z. B. Bosch, Kraftfahrtechnisches Taschenbuch, 20. Aufl., 1987, S. 628/629).

Die übliche Vorgehensweise bei der Precrash-Sensorik ist jedoch unvollkommen, da nur ein konkret vorliegendes Kriterium erfasst wird, das auf eine unmittelbar bevorstehende Kollision schließen lässt, etwa ein Ultraschall-Sensor zum Messen sowohl der Entfernung als auch der Geschwindigkeit des eigenen Fahrzeuges in Bezug auf ein Objekt. Dies ist zum einen umständlich und damit fehlerbehaftet und zum anderen ungenau. Die bekannte Precrash-Sensorik kann daher zu für die Person im Sitz unangenehmen Auslösungen der reversibel ansteuerbaren Rückhaltemittel führen oder aber zu einer zu späten oder gar fehlenden Auslösung der reversibel ansteuerbaren Rückhaltemittel, so dass im tatsächlichen Fall einer gefährlichen Kollision deren schützende Funktion zu spät oder gar nicht auftritt.

Ausgehend hiervon ist es Aufgabe der vorliegenden Erfindung, die Precrash-Sensorik dahingehend weiter zu entwickeln, dass bei einfachem Aufbau eine sichere, d. h. rechtzeitige und weitgehend fehlerfreie Ansteuerung der reversiblen Rückhaltemittel möglich ist.

### Vorteile der Erfindung

Die Aufgabe wird durch die Merkmale der unabhängigen Ansprüche gelöst.

Die Erfindung wird durch die Merkmale der abhängigen Ansprüche weitergebildet.

Die Erfindung geht dabei von der Erkenntnis aus, dass eine einzige einfache Messung unabhängig von der Beschleunigungsmessung für den tatsächlichen Kollisionsfall dann genügt, wenn aus ihr durch fahrzeugseitige Auswertung kontinuierlich oder quasi kontinuierlich ableitbar ist, ob Objekte außerhalb des Fahrzeuges vorhanden sind und ob bei solchen Objekten die Gefahr einer Kollision zu erwarten ist. Die Erfindung erreicht dies durch eine einfache kontinuierliche Abstandsmessung zu einem oder jeden in einem Erfassungsbereich eines Abstandssensors vorhandenen Objekt. Aus dieser kontinuierlichen Messung des Abstandes lassen sich in einfacher Weise alle Größen ableiten, aufgrund deren beurteilt werden kann, ob eine Kollision zu erwarten ist. Ferner lassen sich im gegebenen Fall, gegebenenfalls auch kontinuierlich, auch die Relativgeschwindigkeit zwischen Objekt und Fahrzeug berechnen, die Zeit berechnen, bis zur erwarteten Kollision zwischen einem erfassten Objekt und dem Fahrzeug, der Ort am Fahrzeug berechnen (Aufprallort) an dem die zu erwartende Kollision zwischen Objekt und Fahrzeug stattfinden soll, und auch ein Winkel gegenüber einer Referenzachse des Fahrzeuges berechnen, unter dem die zu erwartende Kollision zwischen Objekt und Fahrzeug stattfindet. Abhängig davon können reversibel ansteuerbare Rückhaltemittel situationsangepasst, d. h. an die jeweilige zu erwartende Kollision angepasst optimal und gegebenenfalls für jeden Sitz unterschiedlich angesteuert werden. Schließlich können die irreversibel ansteuerbaren Rückhaltemittel in einen an die zu erwartende Kollision jeweils optimal angepassten Vorbereitungszustand versetzt werden, so dass sie im Falle der tatsächlichen Kollision und deren Beurteilung als gefährlich unmittelbar angesteuert und ausgelöst (gezündet) werden können. Schließlich kann auch durch Berechnung abgeschätzt werden, durch welches von mehreren Objekten die gefährlichste Kollision und/oder die nächstliegende Kollision zu erwarten ist.

### Zeichnung

Die Erfindung wird anhand des in der Zeichnung dargestellten Ausführungsbeispiels näher erläutert. Es zeigen:
- Fig. 1: schematisch den grundsätzlichen Aufbau einer erfindungsgemäßen Anordnung,
- Fig. 2: schematisch die Vorgänge bei der gegenseitigen Annäherung zwischen einem Fahrzeug und einem Objekt,
- Fig. 3: schematisch eine Vergrößerung aus Fig. 2 zur Darstellung der Ermittelbarkeit kollisionsrelevanter Größen.

### Beschreibung eines Ausführungsbeispieles

Mindestens einem Sitz (nicht dargestellt) in einem Fahrzeug 1 sind eine Reihe von Rückhaltemittel zugeordnet, von denen im allgemeinen ein Teil irreversibel ansteuerbar ist, etwa durch pyrotechnische Zündung, und von denen ein Teil reversibel ansteuerbar ist, etwa mittels Elektromotoren. Beispielhaft für ein irreversibel ansteuerbares Rückhaltemittel sind ein Airbag 2 und ein pyrotechnisch zündbarer Gurtstraffer 3 vorgesehen. Als Beispiel reversibel ansteuerbarer Rückhaltemittel sind ein motorisch angetriebenes Rückhaltesystem, wie ein Gurtstrammer 4 und ein Sitzverstellsystem 5 vorgesehen, mittels dem Sitzfläche, Rücklehne und/oder Kopfstütze und/oder Armlehnen in eine vorgegebene Position verstellbar sind. In dem Fahrzeug 1 ist ferner insbesondere ein Beschleunigungssensor 6 an sich bekannter Bauart vorgesehen, der aufgrund seiner Bauart, durch eine Auswerteanordnung 7 symbolisiert, laufend feststellt, ob eine Kollision stattgefunden hat. Im gegebenen Fall wird ein entsprechendes Auslösesignal über ein Netzwerk 8 an alle Rückhaltemittel 2 bis 5 zu deren Auslösung abgegeben, derart, dass die irreversibel ansteuerbaren Rückhaltemittel 2, 3 nur aufgrund dieses Signals auslösbar sind und die reversibel ansteuerbaren Rückhaltemittel 4, 5 jedenfalls spätestens bei Vorliegen dieses Signals angesteuert werden.

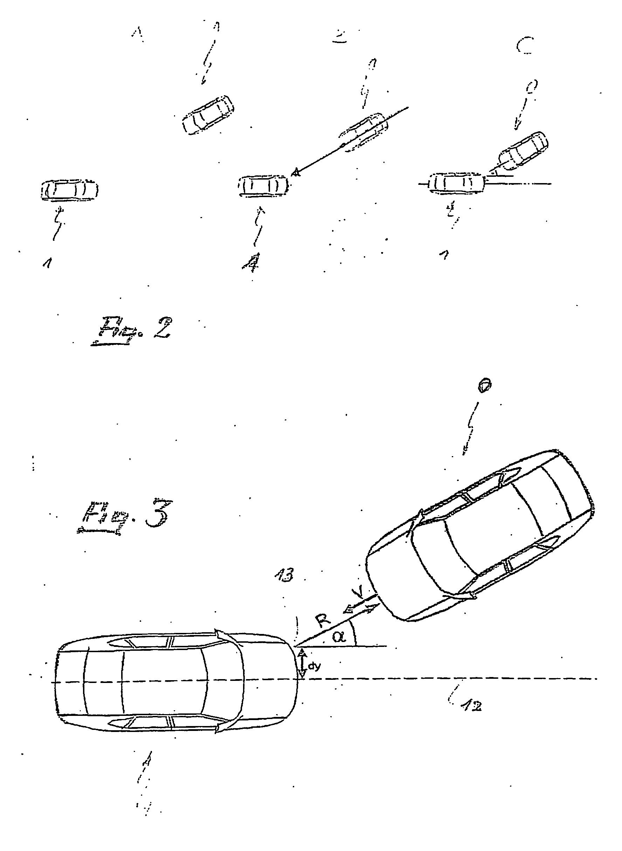

Gemäß der vorliegenden Erfindung ist ferner mindestens ein Entfernungsmesser oder Abstandssensor 9 vorgesehen, der in der Lage ist, den Abstand zu einem oder jedem in seinem Erfassungsbereich befindlichen Objekt O (Fig. 2 und Fig. 3) zu messen. Ein solcher Sensor ist beispielsweise ein Radargerät, wie ein 24GHz-Short-Range-Radar-Sensor oder ein Video-Sensor. Wesentlich ist, dass die Abstandsmessung zu mindestens einem Objekt O im Erfassungsbereich kontinuierlich oder quasi-kontinuierlich, d. h., ständig mit nur sehr geringen Zeitabständen zwischen jeder Messung, erfolgt. Dieses Mess- oder Erfassungssignal wird in einer Auswerteschaltung 10 ebenfalls laufend daraufhin untersucht, ob bestimmte Kriterien vorliegen, aufgrund deren mit einer Kollision gerechnet werden kann oder muss, wie dies weiter unten erläutert wird.

Wenn die Auswerteschaltung 10 ermittelt, dass mit einem für den in dem betroffenen Sitz befindlichen Person gefährlichen Unfall (Crash) aufgrund einer zu erwartenden Kollision zwischen dem Fahrzeug 1 und dem Objekt O gerechnet werden muss, werden über ein Netzwerk 11 entsprechende Signale an die genannten irreversibel ansteuerbaren und reversibel ansteuerbaren Rückhaltemittel 2 bis 5 übermittelt. Für die verschiedenen Rückhaltemittel 2 bis 5 können dabei insbesondere nach Beurteilung der zu erwartenden Kollision unterschiedliche Signale gegebenenfalls auch zu unterschiedlichen Zeiten übermittelt werden.

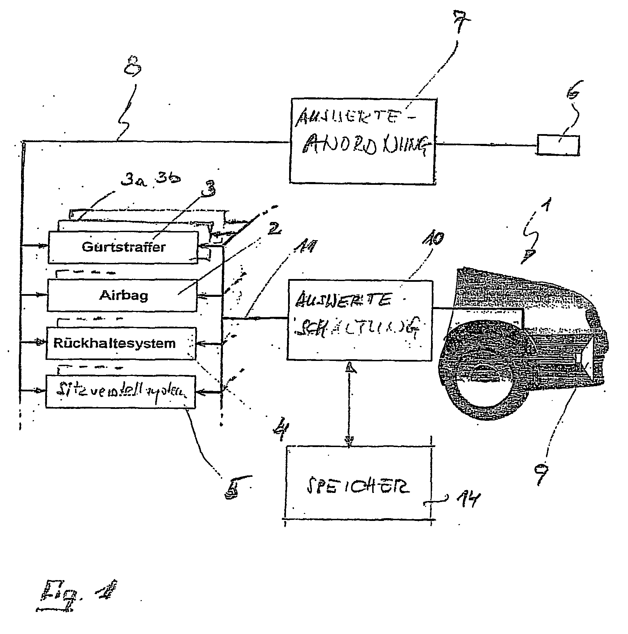

Jedes der in Fig. 1 schematisch dargestellten Rückhaltemittel 2 bis 5 weist eine zugeordnete Ansteuerschaltung auf, die das Rückhaltemittel 2, ... 5 selbst jedenfalls in einen vorbereitenden Zustand versetzt (voransteuert) und sogar, bei Vorliegen bzw. Beurteilen als Vorliegens entsprechender Kriterien, jedenfalls die reversibel ansteuerbaren Rückhaltemittel 4, 5, jedoch nicht die irreversibel ansteuerbaren Rückhaltemittel 2, 3, auszulösen vermag.

Die Auswerteschaltung 10 ermittelt zumindest aus der dem Abstand zwischen Fahrzeug 1 und dem Objekt O entsprechenden Größe auch eine Änderung der Größe mit der Zeit. Hieraus kann ermittelt werden, ob sich der Abstand zwischen Fahrzeug 1 und Objekt O vergrößert oder verkleinert. Im letzteren Fall kann davon ausgegangen werden, dass.zumindest latent die Gefahr einer Kollision gegeben ist.

Daraus lässt sich ferner berechnen, wann eine Kollision als unvermeidbar angesehen werden muss, und zwar insbesondere abhängig von der Relativgeschwindigkeit zwischen dem Fahrzeug 1 und dem Objekt O und dem tatsächlich vorliegenden, gemessenen Abstand.

Da die Lage des Objektes O gegenüber dem Fahrzeug 1, jedenfalls bezüglich einer Referenzachse des Fahrzeuges 1, erfassbar oder berechenbar ist, kann durch laufende Berechnung der vermutliche Kollisionspunkt zwischen Fahrzeug 1 und Objekt 0 an dem Fahrzeug 1 in seinem Abstand zur Referenzachse und seinem Winkel zur Referenzachse ziemlich genau bestimmt werden. Abhängig davon können die Rückhaltemittel, die verschiedenen Sitzen des Fahrzeuges zugeordnet sind, in unterschiedlicher Weise angesteuert bzw. vorbereitet werden, so dass die Person in dem jeweiligen Sitz im Falle der durch den Beschleunigungssensor 6 erfassten tatsächlichen Kollision in jeweils optimaler Weise geschützt werden kann.

Fig. 1 zeigt ferner, dass der Auswerteschaltung 10 ein Speicher 14 zugeordnet ist. In dem Speicher 14, der eine bauliche Einheit mit der Auswerteschaltung 10 besitzen kann, sind statistisch ausgewertete bzw. aufbereitete Daten abgespeichert, mittels denen aufgrund eines festgestellten Abstandes oder zumindest einer Änderung des Abstandes über die Zeit für den Fall einer Kollision auf eine voraussichtliche Schwere des Unfalles geschlossen werden kann. Aufgrund der durch die Auswerteschaltung 10 ermittelten Abschätzung der Gefahr einer bevorstehenden Kollision und den aus dem Speicher 14 abgerufenen Daten über eine mögliche Unfallschwere können daher die von der Auswerteschaltung 10 in das Netzwerk 11 eingegebenen und damit den Rückhaltemitteln 2, ... 5 zugeführten Signale daraufhin angepasst werden, mit welcher Unfallschwere im Fall der tatsächlichen Kollision, die mittels des Beschleunigungssensors 6 ermittelt wird, gerechnet werden muss. Hierdurch kann eine geeignete Voransteuerung der Rückhaltemittel in jeweils an die zu erwartende Unfallschwere angepasster Weise erfolgen. Beispielsweise kann, wenn mit einem schweren Unfall gerechnet werden muss, bereits vor der Erfassung der Kollision mittels des Beschleunigungssensors 6 das Sitzverstellsystem 5 ausgelöst werden, derart, dass die Teile des Sitzes in die für den zu erwartenden Unfall optimale Position verstellt werden. Beispielsweise kann ferner, wenn mit einem eher seitlich erfolgenden schweren Aufprall gerechnet werden muss, eine Voransteuerung von Seitenairbags und/oder Fensterairbags des unmittelbar betroffenen Sitzes in anderer Weise erfolgen, als die eines anderen Sitzes.

Wie erwähnt, können die dem Netzwerk 11 zugeführten Signale der Auswerteschaltung 10 nicht nur zur Vorbereitung der Rückhaltemittel 2 bis 5 verwendet werden, sondern auch zur Auslösung der oder einiger der reversibel ansteuerbaren Rückhaltemittel 4, 5, falls die Auswerteschaltung 10 ermittelt, dass eine Kollision als unvermeidbar angesehen werden muss. Diese Einschätzung kann fehlerhaft sein, beispielsweise, weil das Objekt = nicht geeignet ist, eine gefährliche Kollision auszulösen, so dass es zweckmäßig ist, dann, wenn die von der Auswerteschaltung 10 ermittelte Zeit für das Eintreffen der Kollision um ein vorgegebenes Maß verstrichen ist, das entsprechende Signal in dem Netzwerk 11 gelöscht wird.

Im folgenden sei die grundsätzliche Wirkungsweise näher erläutet. Fig. 2 zeigt die verschiedenen Stufen A, B und C der gegenseitigen Annäherung des Fahrzeuges 1 und eines Objektes O, wobei es nur auf die Relativverhältnisse ankommt.

Im Falle von Fig. 2 A ist zunächst davon auszugehen, dass der Abstandssensor 9 des Fahrzeuges 1 noch nicht in der Lage ist, das Objekt O zu erfassen. Im Falle der Fig. 2 B hat der Abstandssensor 9 das Objekt O erfasst und misst kontinuierlich den. gegenseitigen Abstand. Die Auswerteschaltung 10 ermittelt dann die Relativgeschwindigkeit und ermittelt ferner aus der Richtung der Annäherung weitere kollisionsspezifische Daten, und veranlasst dann, wenn die Auswerteschaltung 10 eine Kollision zwischen dem Fahrzeug 1 und dem Objekt O als unvermeidbar oder jedenfalls als zu erwarten ermittelt, die Abgabe entsprechender Signale über das Netzwerk 11 an die verschiedenen Rückhaltemittel 2 bis 5.

Fig. 3 zeigt beispielhaft die Situation, wie sie etwa in Fig. 2 C dargestellt ist. In Fig. 3 ist die Referenzachse 12 des Fahrzeuges 1 dargestellt. Zweckmäßig entspricht sie einer Fahrzeugmittenachse in Fahrzeuglängsrichtung. Falls nur ein Abstandssensor 9 vorgesehen ist, ist es zweckmäßig diese Referenzachse 12 so zu legen, dass sie durch den Abstandssensor 9 hindurchgeht. Es ist von Vorteil, wenn der Abstandssensor 9 ferner so ausgebildet ist, dass das Objekt O hinsichtlich der Lage (Richtung R) gegenüber der Referenzachse 12 bestimmbar ist. Dann kann in einfacher Weise aus dem gemessenen Abstand (Entfernung) und der Lagebeziehung laufend ein möglicher Aufprallpunkt 13 zwischen dem Fahrzeug 1 und dem Objekt O bestimmt werden, und zwar hinsichtlich des Abstandes dy zur Referenzachse 12 und hinsichtlich des Winkels α zur Referenzachse 12. Durch die kontinuierliche (oder quasi-kontinuierliche) ständige Erfassung des Abstandes zwischen Fahrzeug 1 und Objekt O und der Änderung dieses Abstandes lässt sich auch ohne die vorgenannte Maßnahme auf rein rechnerische Weise feststellen, ob und gegebenenfalls an welchem Aufprallpunkt 13 mit einer Kollision unter welchem Winkel α zu rechnen ist. Da sich aus der kontinuierlich bzw, quasi-kontinuierliche Messung des Abstandes auch die Relativgeschwindigkeit V zwischen dem Fahrzeug 1 und dem Objekt O ermitteln lässt, kann sehr präzise ermittelt werden, ob mit einer Kollision zu rechnen ist.

D. h., dass mit Hilfe der erfindungsgemäß vorgesehenen Abstandsmessung und deren laufender Auswertung in der Auswerteschaltung 10 eine den tatsächlichen Verhältnissen sehr nahe kommende Situationsanalyse und Situationsbeschreibung erfolgen kann. Diese Situationsanalyse und Situationsbeschreibung wird um so genauer, je genauer das Verhalten des Objektes O erfasst werden kann. Bei auf Radarsystemen beruhenden Entfernungsmessungen können rechnerische Verfahren, wie sie bei der Spurverfolgung (Tracking) an sich bekannt sind, herangezogen werden, wobei das Eigenverhalten des Fahrzeuges 1 darüber hinaus mit zusätzlich berücksichtigt werden kann. Ist das Verhalten des Objektes O weitgehend ermittelt, so lässt sich daraus mittels bekannter Vorhersageverfahren (Prädiktionsverfahren) ermitteln, ob eine Kollision unmittelbar bevorsteht.

Die Erfindung wurde anhand einer Annäherung erläutet, bei dem sich das Objekt O dem Fahrzeug 1 im wesentlichen an deren Front (relativ) annähert, wobei der Abstandssensor 9 (gemäß Fig. 1) in dem Frontbereich angeordnet ist. Abhängig von dem Erfassungsbereich des Abstandssensors 9, der als etwa keulenartig betrachtet werden kann, kann es zweckmäßig sein, im Frontbereich des Fahrzeuges 1 mehr als einen Abstandssensor 9 oder über das Fahrzeug 1 verteilt mehrere Abstandssensoren 9 vorzusehen. Zweckmäßig überlappen sich die Erfassungsbereiche verschiedener Abstandssensoren 9. Dann kann, jedenfalls in gewissem Umfang, die Lage des Objektes O gegenüber dem Fahrzeug 1 insbesondere wenn es sich (relativ) durch einen solchen Überlappungsbereich bewegt, sehr genau erfasst werden, wobei diese Erfassung dann bei der Analyse berücksichtigt werden kann.

In Fig. 1 ist ferner angedeutet, dass eine einzige Auswerteschaltung 10 für mehreren Sitzen des Fahrzeuges 1 zugeordneten jeweiligen Rückhaltemitteln vorgesehen sein kann, was beispielsweise durch Gurtstraffer 3a und 3b angedeutet ist. Dabei ist zu berücksichtigen, dass die unterschiedlichen Sitze eines Fahrzeuges, Fahrersitz, Beifahrersitz, Rücksitze, in unterschiedlicher Weise mit Rückhaltemitteln ausgerüstet sein können und deren Ansteuerung je nach Ort, aber auch Art und Schwere der Kollision (Aufprallort 13) sehr unterschiedlich sein sollte.

Die vorliegende Erfindung wurde anhand einer Anordnung erläutert, bei der jedes Rückhaltemittel eine eigene Ansteuerschaltung aufweist. Ferner wurde die Anordnung so erläutert, dass dem Abstandssensor 9 zur Abstandsmessung eine eigene Auswerteschaltung 10 zugeordnet ist, und dass dem Beschleunigungssensor 6 eine eigene Auswerteanordnung 7 zugeordnet ist. Selbstverständlich ist es möglich, einerseits die Auswerteschaltung 10 und den Abstandssensor 9 baulich zu vereinigen oder andererseits die Auswerteschaltung 10 und die jeweiligen Ansteuerschaltung der Rückhaltemittel zu integrieren. Auch kann die Auswerteanordnung 7 in eine solche integrierte Anordnung mit einbezogen sein.

Ferner ist die Erfindung grundsätzlich auch dann anwendbar, wenn ein Rückhaltemittel in mehreren Stufen, gegebenenfalls sogar adaptiv, ansteuerbar ist, etwa ein mehrstufig ansteuerbarer Airbag oder dergleichen.

## Patentansprüche

1. Verfahren zur Ansteuerung von insbesondere reversibel ansteuerbaren Rückhaltemitteln für Personen in einem Sitz in einem Fahrzeug bei der Erfassung einer Situation, bei der mit einer Kollision zwischen dem Fahrzeug und einem Objekt zu rechnen ist, wobei der Abstand des Fahrzeuges (1) von dem Objekt (o) kontinuierlich erfasst wird, wobei der erfasste Abstand auf eine Änderung über die Zeit hin untersucht wird, **dadurch gekennzeichnet, dass** der erfasste Abstand und dessen Änderung über die Zeit kontinuierlich daraufhin untersucht werden, ob mit einer Kollision zu rechnen ist und dass abhängig davon im gegebenen Fall Voransteuersignale für Ansteuereinrichtungen und/oder Auslöseeinrichtungen der Rückhaltemittel (2, 3, 4, 5) erzeugt und diesen zur Verfügung gestellt werden, wobei reversibel ansteuerbare Rückhaltemittel (4, 5) im Falle der Beurteilung als eine unvermeidbar oder tatsächlich bevorstehende Kollision entsprechend angesteuert bzw. ausgelöst werden, während die irreversiblen ansteuerbaren Rückhaltemittel (2, 3) nur im Fall einer sicher vorliegenden Kollision mit Verletzungsrisiko ausgelöst (6, 7, 8) werden, dass der erfasste Abstand und statistisch ermittelte und hinsichtlich der jeweiligen Unfallschwere klassifizierte entsprechende Unfalldaten miteinander verglichen werden, dass abhängig von dem Vergleichsergebnis auf die Unfallschwere einer möglichen bevorstehenden Kollision zwischen dem Fahrzeug (1) und dem Objekt (O) geschlossen wird, abhängig davon Voransteuersignale für Ansteuereinrichtungen und/oder Auslöseeinrichtungen der Rückhaltemittel (2, ..., 5) erzeugt und diesen zur Verfügung gestellt werden und dass bei Ermitteln einer unvermeidbar bevorstehende Kollision reversibel ansteuerbare Rückhaltemittel (4, 5) entsprechend der zu erwartenden Unfallschwere angesteuert und ausgelöst werden und irreversibel ansteuerbaren Rückhaltemittel (2, 3) in einen Vorbereitungszustand versetzt werden und erst bei Feststellen (6, 7, 8) einer tatsächlichen Kollision ausgelöst unter Berücksichtigung der Parameter hinsichtlich der Unfallsschwere werden.

2. Verfahren nach Anspruch 1, **dadurch gekennzeichnet, dass** der Abstand erfasst wird, sobald das Objekt (O) sich in einem vorgegebenen Umgebungsbereich des Fahrzeuges (1) befindet.

3. Verfahren nach Anspruch 1 oder 2, **dadurch gekennzeichnet, dass** aus dem erfassten Abstand und dessen Änderung über die Zeit zumindest eines ermittelt wird von
- Relativgeschwindigkeit (V) zwischen Objekt (O) und Fahrzeug (1)
- Ort (13) am Fahrzeug (1) der zu erwartenden Kollision zwischen Objekt und Fahrzeug (1),
- Winkel (α) gegenüber einer Referenzachse (12) des Fahrzeuges (1) der zu erwatenden Kollision zwischen Objekt (O) und Fahrzeug (1).

4. Verfahren nach einem der Ansprüche 1 bis 3, **dadurch gekennzeichnet, dass**, wenn als Ergebnis der Untersuchung das unmittelbare Bevorstehen einer Kollision ermittelt wird, Ansteuer- bzw. Auslösesignale an die Ansteuer- bzw. Rückhaltemittel (4, 5) übertragen werden, um diese anzusteuern bzw. auszulösen.

5. Verfahren nach Anspruch 4, **dadurch gekennzeichnet, dass** das Ansteuern der reversiblen Rückhaltemittel das Verstellen des Sitzes in eine für die zu erwartende Kollision günstige Position umfasst.

6. Verfahren nach Anspruch 4 oder 5, **dadurch gekennzeichnet, dass** auch ein Voransteuersignal an die Ansteuereinrichtungen für irreversibel ansteuerbare Rückhaltemittel (2, 3) abgegeben wird, um bei Erfassen (6, 7, 8) einer tatsächlichen Kollision diese irreversibel ansteuerbare Rückhaltemittel (2, 3) optimal situationsangepasst und ohne Zeitverzögerung ansteuern bzw. auslösen zu können.

7. Verfahren nach einem der Ansprüche 3 bis 6, **dadurch gekennzeichnet**, das dann, wenn die Zeit, in der die zu erwartende Kollision erfolgen sollte, um ein vorgegebenes Maß überschritten ist und eine tatsächliche Kollision nicht stattgefunden hat, die Auslösesignale für die reversibel ansteuerbaren Rückhaltemittel (4, 5) und die Voransteuersignale für die irreversibel ansteuerbaren Rückhaltemittel (2, 3) aufgehoben werden.

8. Verfahren nach einem der Ansprüche 3 bis 7, **dadurch gekennzeichnet, dass** abhängig von dem ermittelten Ort (13) der zu erwartenden Kollision und/oder dem ermittelten Winkel (α) der zu erwartenden Kollision die dem betrachteten Sitz des Fahrzeuges (1) zugeordneten Rückhaltemittel (2, ..., 5) nach Maßgabe der zu erwartenden Kollision jeweils optimal angesteuert werden.

9. Verfahren nach einem der Ansprüche 1 bis 8, **dadurch gekennzeichnet, dass** der Abstand zum Objekt (O) innerhalb eines vorgegebenen Winkelbereichs erfasst wird.

10. Verfahren nach einem der Ansprüche 1 bis 8, **dadurch gekennzeichnet, dass** der Abstand zum Objekt (O) innerhalb verschiedner vorgegebener Winkelbereiche getrennt erfasst wird, wobei sich die Winkelbereiche überlappen können.

11. Anordnung zur Ansteuerung von insbesondere reversibel ansteuerbaren Rückhaltemitteln für Personen in einem Sitz in einem Fahrzeug und einem Objekt zu rechnen ist, dass mindestens ein Abstandssensor (9) am Fahrzeug (1) befestigt ist und den Abstand zu einem Objekt (O) kontinuierlich erfasst, dass eine Auswerteschaltung (10) die Änderung des Abstandes über die Zeit ermittelt, **dadurch gekennzeichnet, dass** die Auswerteschaltung (10) aus dem Abstand und dessen Änderung über die Zeit kontinuierlich ermittelt, ob mit einer Kollision zu rechnen ist und im gegebenen Fall ein Voransteuersignal für Ansteuereinrichtungen und/oder Auslöseeinrichtungen der Rückhaltemittel erzeugt und diesen zur Verfügung stellt (11), wobei die reversibel ansteuerbaren Rückhaltemittel (4, 5) im Falle der Beurteilung als eine unvermeidbar oder tatsächlich bevorstehende Kollision entsprechend ansteuerbar bzw. auslösbar sind, während die irreversibel ansteuerbaren Rückhaltemittel (2,3) nur im Fall einer durch einen am Fahrzeug (1) angebrachten Beschleunigungssensors (6) erfassten sicher vorliegenden Kollision ausgelöst werden, dass der Auswerteschaltung (10) ein Speicher (14) zugeordnet ist, der statistisch ermittelte und hinsichtlich der jeweiligen Unfallschwere klassifizierte entsprechende Unfalldaten enthält, und die Auswerteschaltung (10) den erfassten Abstand und die zugeordneten statistisch ermittelten Unfalldaten vergleicht, abhängig von der durch den Vergleich ermittelten Unfallschwere einer möglichen bevorstehende Kollision zwischen dem Fahrzeug (1) und dem Objekt (O) Voransteuersignale für Ansteuer- und/oder Auslöseeinrichtungen der Rückhaltemittel (2, ..., 5) erzeugt und diesen zur Verfügung stellt, wobei die Rückhaltemittel im Falle der Ermittlung einer unvermeidbar oder tatsächlich bevorstehenden Kollision bzw. einer tatsächlich vorliegenden (6, 7, 8) Kollision der ermittelten Unfallschwere entsprechend jeweils optimal ansteuerbar bzw. auslösbar sind.

12. Anordnung nach Anspruch 11, **dadurch gekennzeichnet, dass** der Abstandssensor (9) den Abstand erfasst, sobald das Objekt (O) sich in einem vorgegebenen Umgebungsbereich des Fahrzeuges (1) befindet.

13. Anordnung nach Anspruch 11 oder 12, **dadurch gekennzeichnet, dass** die Auswerteschaltung (10) ferner aus dem erfassten Abstand und dessen Änderung über die Zeit zumindest eines ermittelt von
- Relativgeschwindigkeit (V) zwischen Objekt (O) und Fahrzeug (1),
- Ort (13) am Fahrzeug (1) der zu erwartenden Kollision zwischen Objekt (O) und Fahrzeug (1),
- Winkel (α) gegenüber einer Referenzachse (12) des Fahrzeuges (1) der zu erwartenden Kollision zwischen Objekt (O) und Fahrzeug (1).

14. Anordnung nach einem der Ansprüche 11 Bis 13, **dadurch gekennzeichnet, dass** die Auswerteschaltung (10), wenn sie ermittelt, dass eine Kollision unmittelbar bzw. unvenneidbar bevorsteht, Ansteuer- bzw. Auslösesignale an die Ansteuereinrichtungen der reversibel ansteuerbaren Rückhaltemittel (4, 5) überträgt, um diese anzusteuem bzw. auszulösen.

15. Anordnung nach Anspruch 14, **dadurch gekennzeichnet, dass** die Auswerteschaltung (10) im gegebenen Fall Ansteuersignale an Verstelleinrichtungen des Sitzes abgibt, um diesen in eine für die zu erwartende Kollision günstige Position zu verstellen.

16. Anordnung nach einem der Ansprüche 12 bis 14, **dadurch gekennzeichnet, dass** die Auswerteschaltung (10) Voransteuersignale an die Ansteuereinrichtungen für irreversibel ansteuerbare Rückhaltemittel (2, 3) abgibt, um diese derart vorzubereiten, dass bei Erfassen (6, 7, 8) einer tatsächlichen Kollision die irreversibel ansteuerbaren Rückhaltemittel (4, 5) ohne Zeitverzögerung ansteuerbar sind.

17. Anordnung nach einem der Ansprüche 13 bis 16, **dadurch gekennzeichnet, dass** die Auswerteschaltung die Ansteuer- bzw. Auslösesignale für die reversibel ansteuerbaren Rückhaltemittel (4, 5) und die Voransteuersignale für die irreversibel ansteuerbaren Rückhaltemittel (2, 3) aufhebt, wenn die Zeit, zu der die zu erwartende Kollision erfolgen sollte, um ein vorgegebenes Maß überschritten ist und eine tatsächliche Kollision nicht stattgefunden hat.

18. Anordnung nach einem der Amsprüche 12 Bis 16, **dadurch gekennzeichnet, dass** die Steuerschaltung abhängig von dem ermittelten Ort (13) der zu erwartenden Kollision und/oder dem ermittelten Winkel (α) der zu erwartenden Kollision die einem Sitz des Fahrzeuges (1) jeweils zugeordneten Rückhaltemittel (2, ..., 5) nach Maßgeben der zu erwartenden Kollision optimal ansteuert.

19. Anordnung nach einem der Ansprüche 11 bis 18, **dadurch gekennzeichnet, dass** der Abstandssensor (9) so ausgebildet ist, dass der den Abstand zum Objekt (O) nur innerhalb eines vorgegebenen Winkelbereiches erfasst.

20. Anordnung nach einem der Ansprüche 11 bis 18, **dadurch gekennzeichnet, dass** mehrere Abstandssensoren (9) vorgesehen sind, die den Abstand zu dem Objekt (O) innerhalb verschiedener vorgegebener Winkelbereiche sich überlappen können.

## Claims

1. Method for actuating restraining means which can be actuated in particular in a reversible fashion, for persons in a seat in a vehicle during the sensing of a situation during which a collision between the vehicle and an object is to expected, wherein the distance between the vehicle (1) and the object (O) is sensed continuously, wherein the sensed distance is examined for a change over time, **characterized in that** the sensed distance and its change over time are examined continuously to determine whether a collision is to expected, and **in that** if this is the case preactuation signals for actuation devices and/or triggering devices of the restraining means (2, 3, 4, 5) are generated as a function thereof and made available to said means, wherein, in the case of an assessment as an unavoidably or actually imminent collision, restraining means (4, 5) which can be actuated in a reversible fashion are correspondingly actuated or triggered while the restraining means (2, 3) which can be actuated in an irreversible fashion are triggered (6, 7, 8) only in the case of a definitely occurring collision with a risk of injury, **in that** the sensed distance and the statistically determined corresponding accident data which is classified in terms of the respective severity of an accident are compared with one another, **in that** the severity of accident of a possible imminent collision between the vehicle (1) and the object (O) is concluded as a function of the comparison result and preactuation signals for actuation devices and/or triggering devices of the restraining means (2, ..., 5) are generated as a function of this and are made available to said devices, and **in that**, when an unavoidably imminent collision is determined, restraining means (4, 5) which can be actuated in a reversible fashion are actuated and triggered in accordance with the expected severity of an accident and restraining means (2, 3) which can be actuated in an irreversible fashion are not placed in a preparatory state and triggered, taking into account the parameters relating to the severity of an accident, until an actual collision is sensed (6, 7, 8).

2. Method according to Claim 1, **characterized in that** the distance is sensed as soon as the object (O) is in a predefined area surrounding the vehicle (1).

3. Method according to Claim 1 or 2, **characterized in that** at least one of
- relative velocity (V) between the object (O) and vehicle (1),
- location (13) on the vehicle (1) of the expected collision between the object and vehicle (1),
- angle (α) with respect to a reference axis (12) of the vehicle (1) of the expected collision between the object (O) and vehicle (1),
is determined from the sensed distance and its change over time.

4. Method according to one of Claims 1 to 3, **characterized in that** if it is determined as a result of the examination that a collision is directly imminent, actuation signals or triggering signals are transmitted to the actuation or restraining means (4, 5) in order to actuate or trigger them.

5. Method according to Claim 4, **characterized in that** the actuation of the reversible restraining means comprises adjusting the seat into a position which is favourable for the expected collision.

6. Method according to Claim 4 or 5, **characterized in that** a preactuation signal is also output to the actuation devices for restraining means (2, 3) which can be actuated in an irreversible fashion so that, when an actual collision is sensed (6, 7, 8), these restraining means (2, 3) which can be actuated in an irreversible fashion can be actuated or triggered in a way which is adapted to the situation to an optimum degree and without a delay.

7. Method according to one of Claims 3 to 6, **characterized in that** if the time in which the expected collision was supposed to take place is exceeded by a predefined degree and an actual collision has not taken place, the triggering signals for the restraining means (4, 5) which can be actuated in a reversible fashion and the preactuation signals for the restraining means (2, 3) which can be actuated in an irreversible fashion are cancelled.

8. Method according to one of Claims 3 to 7, **characterized in that** depending on the determined location (13) of the expected collision and/or the determined angle (α) of the expected collision the restraining means (2, ..., 5) which are assigned to the respective seat of the vehicle (1) are respectively actuated in an optimum fashion in accordance with the expected collision.

9. Method according to one of Claims 1 to 8, **characterized in that** the distance from the object (O) is sensed within a predefined angular range.

10. Method according to one of Claims 1 to 8, **characterized in that** the distance from the object (O) is sensed separately within various predefined angular ranges, with the angular ranges being able to overlap.

11. Arrangement for actuating restraining means which can be actuated in particular in a reversible fashion, for persons in a seat in a vehicle and an object, it is to be expected that at least one distance sensor (9) is attached to the vehicle (1) and it continuously senses the distance from an object (O), in that an evaluation circuit (10) determines the change in the distance over time, **characterized in that**, from the distance and its change over time, the evaluation circuit (10) continuously determines whether a collision is to be expected, and if if this is the case it generates a preactuation signal for actuation devices and/or triggering devices of the restraining means and makes them available (11) to said means, wherein, in the case of an assessment as an unavoidably or actuallly imminent collision, the restraining means (4, 5) which can be actuated in a reversible fashion can be correspondingly actuated or triggered while the restraining means (2, 3) which can be actuated in an irreversible fashion are triggered only in the case of a definitely occurring collision which is sensed by an acceleration sensor (6) which is mounted on the vehicle (1), **in that** the evaluation circuit (10) is assigned a memory (14) which contains statistically determined, corresponding accident data which is classified in terms of the respective severity of an accident, and the evaluation circuit (10) compares the sensed distance and the assigned, statistically determined accident data, as a function of which preactuation signals for actuating and/or triggering devices of the restraining means (2, ..., 5) are generated by the comparison of the determined severity of accident of a possible imminent collision between the vehicle (1) and the object (O) and are made available (11) to said devices, in which case, if an unavoidably imminent or actually imminent collision or an actually occurring (6, 7, 8) collision with the determined severity of an accident is determined the restraining means can be correspondingly actuated or triggered in a respectively optimum fashion.

12. Arrangement according to Claim 11, **characterized in that** the distance sensor (9) senses the distance as soon as the object (O) is in a predefined area surrounding the vehicle (1).

13. Arrangement according to Claim 11 or 12, **characterized in that** in addition the evaluation circuit (10) determines at least one of
- relative velocity (V) between the object (O) and vehicle (1),
- location (13) on the vehicle (1) of the expected collision between the object (O) and vehicle (1),
- angle (α) with respect to a reference axis (12) of the vehicle (1) of the expected collision between the object (O) and vehicle (1),
from the sensed distance and its change over time.

14. Arrangement according to one of Claims 11 to 13, **characterized in that** if the evaluation circuit (10) determines that a collision is directly or unavoidably imminent, it transmits actuation signals or triggering signals to the actuation devices of the restraining means (4, 5) which can be actuated in a reversible fashion, in order to actuate or trigger them.

15. Arrangement according to Claim 14, **characterized in that** if a collision is to be expected the evaluation circuit (10) outputs actuation signals to adjustment devices of the seat in order to adjust it into a position which is favourable for the expected collision.

16. Arrangement according to one of Claims 12 to 14, **characterized in that** the evaluation circuit (10) outputs preactuation signals to the actuation devices for restraining means (2, 3) which can be actuated in an irreversible fashion, in order to prepare said means (2, 3) in such a way that when an actual collision is sensed (6, 7, 8) the restraining means (4, 5) which can be actuated in an irreversible fashion can be actuated without a delay.

17. Arrangement according to one of Claims 13 to 16, **characterized in that** the evaluation circuit cancels the actuation or triggering signals for the restraining means (4, 5) which can be actuated in a reversible fashion, and the preactuation signals for the restraining means (2, 3) which can be actuated in an irreversible fashion, if the time at which the expected collision was supposed to take place is exceeded by a predefined degree and an actual collision has not taken place.

18. Arrangement according to one of Claims 12 to 16, **characterized in that**, as a function of the determined location (13) of the expected collision and/or the determined angle (α) of the expected collision, the control circuit actuates the restraining means (2, ..., 5) which are respectively assigned to a seat of the vehicle (1), said actuation being carried out in an optimum fashion in accordance with the expected collision.

19. Arrangement according to one of Claims 11 to 18, **characterized in that** the distance sensor (9) is embodied in such a way that it senses the distance from the object (O) only within a predefined angular range.

20. Arrangement according to one of Claims 11 to 18, **characterized in that** a plurality of distance sensors (9) are provided which can overlap the distance from the object (O) within various predefined angular ranges.

## Revendications

1. Procédé de commande de moyens de retenue de personnes sur un siège d'un véhicule, moyens notamment à commande réversible, selon lequel lorsqu'on saisit une situation pour laquelle une collision est prévisible entre le véhicule et un objet,
on saisit en continu la distance entre le véhicule (1) et l'objet (O),
on examine la variation de la distance saisie en fonction du temps,
**caractérisé en ce qu'**
on examine en continu en fonction du temps la distance saisie et sa variation pour déterminer si une collision est prévisible et
en fonction de cette analyse, le cas échéant, on génère et on fournit des signaux de précommande pour les installations de commande et/ou de déclenchement des moyens de retenue (2, 3, 4, 5),
et au cas où l'analyse prévoit une collision inévitable ou effectivement prévisible, les moyens de retenue à commande réversible (4, 5) sont commandés ou déclenchés de manière correspondante alors que les moyens de retenue (2, 3) à commande irréversible ne sont déclenchés qu'au cas où une collision est garantie avec risque de blessure (6, 7, 8),
on compare la distance saisie et les données d'accident déterminées de manière statistique et classées en fonction de la gravité respective des accidents,
en fonction du résultat de la comparaison, on conclut à la gravité de la collision prévisible, éventuelle, entre le véhicule (1) et l'objet (O), et en fonction de ces conclusions, on génère et on fournit des signaux de précommande pour les installations de commande et/ou de déclenchement des moyens de retenue (2 ... 5), et si on détermine une collision prévisible, inévitable, on commande les moyens de retenue réversibles (4, 5) en fonction de la gravité prévisible de la collision et on les déclenche alors que les moyens de retenue à commande irréversible (2, 3) sont mis dans un état préparatoire et ne sont déclenchés que lorsqu'on constate (6, 7, 8) une collision effective en tenant compte des paramètres relatifs à la gravité de la collision.

2. Procédé de commande de moyens de retenue de personnes selon la revendication 1,
**caractérisé en ce qu'**
on saisit la distance dès que l'objet (O) se trouve dans une zone d'environnement prédéfinie du véhicule (1).

3. Procédé de commande de moyens de retenue de personnes selon la revendication 1 ou 2,
**caractérisé en ce qu'**
à partir de la distance saisie et de sa variation en fonction du temps, on détermine au moins l'un des éléments suivants :
- vitesse relative (V) entre l'objet (O) et le véhicule (1),
- emplacement (13) du véhicule (1) de la collision prévisible entre l'objet et le véhicule (1),
- angle α par rapport à l'axe de référence (12) du véhicule (1) de la collision prévisible entre l'objet (O) et le véhicule (1).

4. Procédé de commande de moyens de retenue de personnes selon l'une des revendications 1 à 3,
**caractérisé en ce que**
lorsqu'on détermine une collision prévue directement comme résultat de l'analyse, on transmet les signaux de commande ou de déclenchement au moyen de commande et/ou de retenue (4, 5) pour les commander ou les déclencher.

5. Procédé de commande de moyens de retenue de personnes selon la revendication 4,
**caractérisé en ce que**
la commande des moyens de retenue réversible comprend le réglage du siège dans une position avantageuse pour la collision prévisible.

6. Procédé de commande de moyens de retenue de personnes selon la revendication 4 ou 5,
**caractérisé en ce qu'**
on émet également un signal de précommande aux installations de commande des moyens de retenue à commande irréversible (2, 3) pour que lorsqu'on saisit (6, 7, 8) une collision effective, les moyens de retenue à commande irréversible (2, 3) soient adaptés de manière optimale à la situation et puissent être commandés ou déclenchés sans retard.

7. Procédé de commande de moyens de retenue de personnes selon l'une des revendications 3 à 6,
**caractérisé en ce que**
si le temps dans lequel la collision prévisible doit se produire est dépassé d'une mesure prédéfinie et qu'il n'y a effectivement pas eu de collision, les signaux de déclenchement des moyens de retenue à commande réversible (4, 5) et les signaux de précommande des moyens de retenue à commande irréversible (2, 3) sont neutralisés.

8. Procédé de commande de moyens de retenue de personnes selon l'une des revendications 3 à 7,
**caractérisé en ce qu'**
en fonction de l'emplacement déterminée (13), la collision prévisible et/ou de l'angle déterminé alpha de la collision prévisible, on commande les moyens de retenue (2 ... 5) associés au siège concerné du véhicule (1) selon l'indication de dimension de la collision prévisible, pour être commandés chaque fois de manière optimale.

9. Procédé de commande de moyens de retenue de personnes selon l'une des revendications 1 à 8,
**caractérisé en ce qu'**
on saisit la distance de l'objet (O) dans une plage angulaire prédéfinie.

10. Procédé de commande de moyens de retenue de personnes selon l'une des revendications 1 à 8,
**caractérisé en ce qu'**
on saisit la distance de l'objet (O) de manière séparée dans différentes plages angulaires prédéfinies et ces plages angulaires peuvent se chevaucher.

11. Dispositif de commande notamment de moyens de retenue à commande réversible de personnes installé dans un siège de véhicule, et saisissant la situation pour laquelle une collision est prévisible entre le véhicule et un objet, comprenant au moins un capteur de distance (9) fixé au véhicule (1) et saisissant en continu la distance par rapport à l'objet (O),
un circuit d'exploitation (10) déterminant la variation de distance en fonction du temps,
**caractérisé en ce que**
le circuit d'exploitation (10) détermine à partir de la distance et de la variation de la distance en fonction du temps, de manière continue, si une collision est prévisible et le cas échéant, il génère et fournit (11) un signal de précommande pour les installations de commande et/ou des installations de déclenchement des moyens de retenue,
les moyens de retenue à commande réversible (4, 5) dans le cas d'une collision considérée comme inévitable ou qui se présentera effectivement, peuvent être commandés ou déclenchés alors que des moyens de retenue à commande irréversible (2, 3) ne sont déclenchés que dans le cas d'une collision garantie de manière certaine, saisie par un capteur d'accélération (6) équipant le véhicule (1),
le circuit d'exploitation (10) comportant une mémoire (14) qui contient des données d'accident déterminées de manière statistique et classées en fonction de la gravité respective des accidents et
le circuit d'exploitation (10) compare la distance saisie et les données d'accident associées, déterminées de manière statistique, et en fonction de la gravité de l'accident obtenue par cette comparaison et concernant une éventuelle collision future entre le véhicule (1) et l'objet (O), il génère des signaux de précommande pour commander les installations de commande et/ou de déclenchement des moyens de retenue (2 ... 5) et fournit ces signaux, et
au cas où une collision inévitable ou effectivement future ou une collision effective (6, 7, 8) les moyens de retenue sont commandés ou déclenchés de manière optimale en fonction de la gravité prévisible de la collision.

12. Dispositif selon la revendication 11,
**caractérisé en ce que**
le capteur de distance (9) saisit la distance dès que l'objet (O) se trouve dans une zone d'environnement prédéfinie du véhicule.

13. Dispositif selon les revendications 11 ou 12,
**caractérisé en ce que**
le circuit d'exploitation (10) détermine en outre, à partir de la distance saisie et de sa variation en fonction du temps :
- la vitesse relative (V) entre l'objet (O) et le véhicule (1),
- le lieu (13) du véhicule (1) au moment de la collision prévisible entre l'objet (O) et le véhicule (1),
- l'angle α par rapport à l'axe de référence (12) du véhicule (1) pour la collision prévisible entre l'objet (O) et le véhicule (1).

14. Dispositif selon l'une des revendications 11 à 13,
**caractérisé en ce que**
le circuit d'exploitation (10) transmet des signaux de commande ou de déclenchement des installations de commande des moyens de retenue à commande réversible (4, 5) pour les commander ou les déclencher si le circuit d'exploitation détermine qu'une collision se produira directement ou est inévitable.

15. Dispositif selon la revendication 14,
**caractérisé en ce que**
le circuit d'exploitation (10) génère, le cas échéant des signaux de commande destinés aux installations de réglage du siège pour régler celui-ci dans une position favorable pour la collision prévue.

16. Dispositif selon l'une des revendications 12 à 14,
**caractérisé en ce que**
le circuit d'exploitation fournit des signaux de précommande aux installations de commande des moyens de retenue à commande irréversible (2, 3) pour préparer ceux-ci de façon qu'à la saisie (6, 7, 8) d'une collision effective, les moyens de retenue à commande irréversible (4, 5) soient commandés sans retard.

17. Dispositif selon l'une des revendications 13 à 16,
**caractérisé en ce que**
le circuit d'exploitation neutralise les signaux de commande ou de déclenchement des moyens de retenue à commande réversible (4, 5) et les signaux de précommande des moyens de retenue réversibles (2, 3), si le temps auquel la collision prévue devait se produire est dépassé d'une durée prédéfinie et qu'il n'y a pas effectivement pas eu de collision.

18. Dispositif selon les revendications 12 à 16,
**caractérisé en ce qu'**
en fonction de l'endroit déterminé (13) de la collision prévisible et/ou de l'angle déterminé α de la collision prévisible, le circuit de commande commande les moyens de retenue (2 ... 5) associés chaque fois à un siège du véhicule (1) de manière optimale en fonction des données de la collision prévisible.

19. Dispositif selon l'une des revendications 11 à 18,
**caractérisé en ce que**
le capteur de distance (9) saisit la distance à l'objet (O) seulement lorsque celui-ci se trouve dans une plage angulaire prédéfinie.

20. Dispositif selon l'une des revendications 11 à 18,
**caractérisé par**
plusieurs capteurs de distance (9) qui peuvent se chevaucher pour la distance à l'objet (O) à l'intérieur de différentes plages angulaires données.
